# EUROPÄISCHE PATENTSCHRIFT

(11) **EP 1 625 781 B1**
(45) Veröffentlichungstag und Bekanntmachung des Hinweises auf die Patenterteilung: **09.01.2008**
(21) Anmeldenummer: 05017406.9
(22) Anmeldetag: 10.08.2005
(51) Int. Cl.: A01B 3/42

(54) **Anbaudrehpflug**
Mounted reversible plough
Charrue portée réversible

(30) Priorität: 11.08.2004 DE 102004039017
(43) Veröffentlichungstag der Anmeldung: 15.02.2006
(73) Patentinhaber: Alois Pöttinger Maschinenfabrik GmbH, 4710 Grieskirchen (AT)
(72) Erfinder: Aumayr, Klaus, Dipl.-Ing., 4612 Scharten (AT); Weigl, Franz, jun., Ing., 3961 Waldenstein (AT)
(74) Vertreter: Thoma, Michael

(56) Entgegenhaltungen:
- EP-A- 0 045 030
- EP-A- 0 196 882
- EP-A- 0 198 405
- DE-A1- 3 715 728
- DE-A1- 3 731 461
- DE-C- 937 381
- DE-U1- 9 114 507

## Beschreibung

Die vorliegende Erfindung betrifft einen Anbaudrehpflug nach dem oberbegriff des Anspruchs 1.

Im Gegensatz zu Anbaudrehpflügen ist es bei Aufsattelpflügen bekannt, den Pflugrahmen sozusagen über eine Deichsel schwenkbar am Schlepper anzuhängen, so dass sich dieser selbst seinen Nachlauf sucht. Dies hat den Vorteil, dass keine Querkräfte auf den Schlepper übertragen werden. Bei einer Schnittbreitenverstellung durch Verschwenken des Pflugrahmens müssen allerdings auch die Räder des Fahrwerks des Aufsattelpflugs entsprechend in eine andere Lenkstellung gebracht werden. Solche Aufsattelpflüge zeigt z. B. die DE 91 14 507 U1, die DE 28 38 828 C2, die DE 27 59 374 oder die DE 27 59 374 C2.

Bei Anbaudrehpflügen jedoch, die über die Dreipunktanlenkung des Anbaubocks ausgehoben werden können, ging man bislang immer den Weg, die Furchenbreite durch ein Verschwenken des Pflugs am Anbaubock und ein entsprechendes Feststellen in der gewünschten Winkellage einzustellen. Der Pflugrahmen wird über den Anlenkträger um eine aufrechte Achse am Anbaubock nach rechts und links verschwenkt, um die Furchenbreite zu variieren. Bei entsprechender Feststellung jedoch treten ggf. Querkräfte am Schlepper auf und beanspruchen die Anlenkung des Anbaubocks. Schon um zu verhindern, dass der Pflug sich in der ausgehobenen Stellung unkontrolliert hin und her bewegt, wurde eine entsprechende Feststellung der Zugpunktachse vorgesehen. Hierdurch konnte zwar eine präzise Einstellung der Furchenbreite erreicht werden, es ergeben sich jedoch Nachteile hinsichtlich des Verschleißes. Zudem wurden zum Teil aufwendige Stellmechanismen vorgesehen, um den Zugpunkt in etwa mittig zur Schlepperspur zu halten.

Aus der EP 0 045 030 ist ein Anbaudrehpflug der eingangs genannten Art bekannt, bei dem einerseits der die Pflugschare tragende Pflugrahmen gegenüber dem Anlenkträger verschwenkbar ist, um die Schnittbreite verändern und die Längsachse des Anlenkträgers im Bereich des Schwerpunkts des Pflugrahmens halten zu können. Andererseits kann der genannte Anlenkträger gegenüber dem Anbaubock um eine aufrechte Achse verschwenkt werden, um die Schnittbreite einstellen zu können. Dabei wird der Anlenkträger mittels eines Hydraulikzylinders je nach Wendestellung der Pflugscharen in eine rechte oder eine linke Anschlagstellung geschwenkt und dort verriegelt, wobei die Anschläge, gegen die der Anlenkträger gefahren wird, einstellbar sind, um verschiedene Schnittbreiten einstellen zu können. Hierbei ergeben sich jedoch wiederum die oben genannten Probleme hinsichtlich der Querkräfte am Schlepper sowie der Beanspruchung der Anlenkung des Anbaubocks.

Der vorliegenden Erfindung liegt daher die Aufgabe zugrunde, einen verbesserten Anbaudrehpflug der genannten Art zu schaffen, der die Nachteile des Standes der Technik vermeidet und letzteren in vorteilhafter Weise weiterbildet. Vorzugsweise soll eine Verschleißminimierung sowie eine vereinfachte Handhabung der Pflugeinstellung erreicht werden.

Erfindungsgemäß wird diese Aufgabe durch einen Anbaudrehpflug gemäß Anspruch 1 gelöst. Bevorzugte Ausgestaltungen sind Gegenstand der Unteransprüche.

Bei dem erfindungsgemäßen Anbaudrehpflug ist eine Selbsteinstellung des Nachlaufs vorgesehen. Die Vorfurchenbreite-Einstellachse ist vom Anbaubock weg nach hinten an den Pflugrahmen verlegt. Erfindungsgemäß ist der Anlenkträger, der als Zug- und Tragelement ausgebildet ist und den Pflugrahmen so mit dem Anbaubock verbindet, dass der Pflugrahmen ausgehoben werden kann, am Anbaubock um eine aufrechte Zugpunktachse freigängig schwenkbar. Zur Einstellung der Vorfurchenbreite ist am hinteren Ende des Anlenkträgers unmittelbar am Pflugrahmen eine aufrechte Furchenbreite-Einstellachse vorgesehen, um die der Pflugrahmen verschwenkbar und in verschiedenen Winkelstellungen verriegelbar ist. Die Kinematik des Pfluges ist hierdurch so ausgelegt, dass durch die freilaufende bzw. freigängige aufrechte Schwenkachse des Anlenkträgers am Anbaubock der Zugpunkt sich selbständig einstellen kann. Bei ausreichend großem Verstellweg der Vorfurche ist somit auch ein Onland-Betrieb möglich. Der Pflug geht aufgrund der Selbsteinstellung den Weg des geringsten Widerstandes, was zu einer Verschleißminimierung führt. Als einzige tatsächlich notwendige Pflugeinstellung ist die Vorfurchenschnittbreite durch Verschwenken des Pflugrahmens relativ zum Anlenkträger um die aufrechte Schwenkachse am Pflugrahmen erforderlich. Der Pflug sucht sich sodann seine Spur hinter dem Schlepper selbst und kann ggf. Hindernissen ausweichen. Eine Einstellung weiterer Gelenkmechanismen ist nicht notwendig.

In Weiterbildung der Erfindung ist die Wendeachse des Pfluges in den Anlenkträger integriert. Der Anlenkträger kann ein Drehgelenk mit einer Drehachse parallel zu seiner Längsachse aufweisen, so dass er in sich um 180° verdreht werden kann, um den Pflugrahmen und die daran befestigten Pflugscharreihen zu wenden. Die am Pflugrahmen vorgesehene Furchenbreite-Einstellachse dreht sich hierbei mit. Die am Anbaubock vorgesehene freigängige Zugpunktachse erfährt keine Drehung, erlaubt jedoch eine neue Selbsteinstellung des Nachlaufs für die gewendete Pflugstellung. Zweckmäßigerweise ist ein Pflugwendeantrieb, insbesondere ein hydraulischer Kraftheber zur Verdrehung des pflugrahmenseitigen Endes des Anlenkträgers gegenüber dem anbaubockseitigen Abschnitt des Anlenkträgers vorgesehen.

Das Drehgelenk kann grundsätzlich an verschiedener Stelle in den Anlenkträger geschaltet sein. Vorzugsweise liegt das Drehgelenk am pflugrahmenseitigen Ende des Anlenkträgers. Hierdurch wird beim Ausheben des Pflugs der Hebelarm des Pflugrahmens und der daran befestigten Pflugscharen bezüglich des Drehgelenks geringer und die entsprechenden Momente kleiner.

Der Anlenkpunkt des Anlenkträgers am Pflugrahmen kann hinsichtlich seiner Lage an die Ausbildung des Pfluges angepasst sein. Nach einer vorteilhaften Ausführung der Erfindung liegt der Anlenkpunkt des Anlenkträgers am Pflugrahmen vom vorderen Ende des Pflugrahmens beabstandet in Fahrtrichtung nach hinten zurückversetzt. Insbesondere liegt er deutlich hinter einer ersten Pflugschar. Zweckmäßigerweise liegt der Anlenkpunkt noch vor der Mitte des Pflugrahmens. Er kann in der vorderen Hälfte des Pflugrahmens angeordnet sein, jedoch vorzugsweise näher zur Mitte hin versetzt als zum vorderen Ende.

Der Anlenkträger kann grundsätzlich eine verschiedene Länge besitzen. Sie ist vorteilhafterweise jedoch größer als der Abstand zweier hintereinander liegender Pflugscharen.

Um ein ungewolltes Hin- und Herschwenken des Pflugs in der ausgehobenen Transport- oder Wendestellung zu verhindern, ist der im Betrieb freigängigen Zugpunktachse eine automatische Schwenksperre zugeordnet, die ein Verschwenken um die am Anbaubock vorgesehene Zugpunktachse immer dann verhindert, wenn der Pflug ausgehoben wird. Die entsprechende Schwenkverriegelungsvorrichtung zur Verriegelung der Freigängigkeit in der angehobenen Transportstellung kann insbesondere eine am Anbaubock vorgesehene Winkeleinstellvorrichtung aufweisen, die in zumindest einer Winkelstellung verriegelbar ist. Durch die Winkeleinstellvorrichtung kann der Anlenkträger in eine für den Transport gewünschte Stellung gebracht und sodann verriegelt werden. Eine einfache Ausbildung einer solchen Winkeleinstellvorrichtung besteht aus einem hydraulischen Kraftheber, der einerseits am Anbaubock und andererseits am Anlenkträger angreift und hydraulisch gesperrt werden kann. Um die Freigängigkeit im Pflugbetrieb sicherzustellen, kann der hydraulische Kraftheber in Schwimmstellung geschaltet werden.

In Weiterbildung der Erfindung ist der Pflug nicht nur als Anbaudrehpflug, sondern auch als Onland-Pflug betreibbar. Bei ausreichend großem Verstellweg der Vorfurche kann der Pflug soweit seitlich zum Schlepper verschwenken, dass dieser nicht in der Furche, sondern seitlich neben dieser auf dem ungepflügten Boden onland fahren kann. Hierdurch kann eine wesentliche Verringerung der Verdichtung und Verschmierung des Unterbodens erreicht werden.

In Weiterbildung der Erfindung kann eine Bodenabstützung des Pflugs insbesondere durch ein mit dem Pflugrahmen verbundenes Stützrad vorgesehen sein, wobei das Stützrad vorzugsweise zum Heck des Pflugrahmens hin angeordnet ist. Das Stützrad selbst kann grundsätzlich verschieden ausgebildet sein, wobei ggf. auch eine Gleitkufe denkbar wäre.

Um die Abstützung des Pflugrahmens mit nur einem bzw. demselben Stützrad in beiden Wendestellungen zu ermöglichen, ist in Weiterbildung der Erfindung das Stützrad relativ zu dem Pflugrahmen um eine liegende Achse schwenkbar gelagert. Insbesondere kann der Pflugrahmen um eine Schwenkachse etwa parallel zu seiner Längsachse gegenüber dem auf dem Boden aufstehenden Stützrad gedreht werden, um den Pflug zu wenden. Durch die Abstützung auch beim Wenden des Pfluges können die auf die Anlenkung und den Anbaubock wirkenden Kräfte insbesondere bei sehr großen Pflügen beträchtlich reduziert werden.

Um ein Wegknicken des mit dem Pflugrahmen schwenkbar verbundenen Stützrades zu verhindern, ist in Weiterbildung der Erfindung ein Stabilisator zur Stabilisierung des Stützrades relativ zum Pflugrahmen vorgesehen. Grundsätzlich möglich wäre es, die Schwenkachse zwischen Pflugrahmen und Stützrad verriegelbar auszubilden. Nach einer vorteilhaften Ausführung der Erfindung jedoch wird das Stützrad durch einen Stabilisator stabilisiert, der eine Art Hilfsrahmen bilden kann und mit dem Anbaubock oder insbesondere dem Anlenkträger verbunden ist, an dem der Pflugrahmen angelenkt ist. Nach einer Ausführung der Erfindung kann der Stabilisator eine sich etwa in Richtung des genannten Anlenkträgers erstreckende Stange sein, die etwa bis zum Heck des Pflugrahmens reicht und dort mit dem Stützrad verbunden ist. Wird der Pflug gewendet, wird der Pflugrahmen um den genannten Stabilisator herum auf die andere Seite gewendet, wobei der Stabilisator das Stützrad festhält.

Bei der gerade beschriebenen Ausführung des Anbaudrehpfluges mit Stützrad kann in vorteilhafter Weise vorgesehen sein, dass der vom Stützrad abgestützte Pflugrahmen gegenüber dem Anlenkträger um eine weitere Achse zumindest begrenzt schwenkbar ist, und zwar um eine liegende Querachse, die sich vorteilhafterweise etwa im Bereich des Anlenkpunktes des Pflugrahmens am Anlenkträger erstreckt. Um diese liegende Querachse kann der Pflugrahmen geringfügig auf-und abwippen, beispielsweise dann, wenn der Pflug mit seinem Stützrad über eine Bodenwelle fährt.

Die Erfindung wird nachfolgend anhand von bevorzugten Ausführungsbeispielen und zugehöriger Zeichnungen näher erläutert. In den Zeichnungen zeigen:
- Figur 1:: eine perspektivische, schematische Darstellung eines Anbaudrehpflugs nach einer bevorzugten Ausführung der Erfindung,
- Figur 2:: eine Draufsicht auf den Anbaupflug aus Figur 1,
- Figur 3:: eine Seitenansicht des Anbaudrehpflugs aus den vorhergehenden Figuren, und
- Figur 4:: eine perspektivische Gesamtansicht eines Anbaudrehpflugs nach einer weiteren bevorzugten Ausführung der Erfindung, bei der der Pflugrahmen durch ein Stützrad am Boden abgestützt ist.

Der in den Figuren gezeigte Anbaudrehpflug 1 umfasst einen Pflugrahmen 2, der im wesentlichen von einem geraden Träger 3 gebildet ist. Zwei Pflugscharreihen 4 und 5 sind auf gegenüberliegenden Seiten bzw. nach oben und unten gerichtet an dem Pflugrahmen 2 befestigt und umfassen jeweils mehrere Pflugschare, in der gezeichneten Ausführung vier Pflugschare, die in Reihe entlang des Rahmenträgers 3 hintereinander angeordnet sind.

Der Pflugrahmen 2 mit den daran angeordneten Pflugscharen wird von einem Anlenkträger 6 getragen, der an einem Anbaubock 7 befestigt ist, der wiederum über eine an sich übliche Dreipunktanlenkung 8 an einen nicht dargestellten Schlepper angebaut werden kann. Durch Anheben des Anbaubocks 7 über die Dreipunktanlenkung 8 wird der Anlenkträger 6 angehoben und hierdurch der Pflug ausgehoben, beispielsweise um gewendet oder transportiert werden zu können.

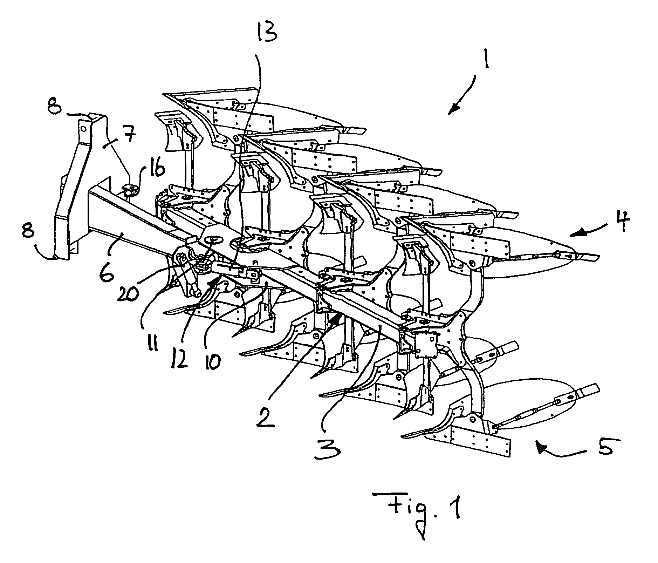

Der Anlenkträger 6 ist mit dem Pflugrahmen 2 etwa im Bereich einer in Fahrtrichtung zweiten Pflugschar 4.2 verbunden, wobei zwischen dem Pflugrahmen 2 und dem Anlenkträger 6 eine vertikale Furchenbreite-Einstellachse 9 vorgesehen ist, um die die Pflugrahmen 2 relativ zu dem Anlenkträger 6 verschwenkt werden kann. Wie Figur 1 zeigt, ist das pflugrahmenseitige Ende des Anlenkträgers 6 zwischen zwei am Pflugrahmen 2 starr befestigten Flanschplatten 10 aufgenommen und durch einen Achsbolzen 11 verbunden. Der Schwenkachse 9 ist ein Schwenkantrieb 12 in Form eines hydraulischen Krafthebers 13 zugeordnet, der einerseits an dem Anlenkträger 6 und andererseits an dem Pflugrahmen 2 bzw. den daran befestigten Flanschplatten 10 angreift. Durch den hydraulischen Kraftheber 13 kann der Winkel α zwischen dem Anlenkträger 6 und dem Rahmenträger 3 des Pflugrahmens 2 eingestellt werden.

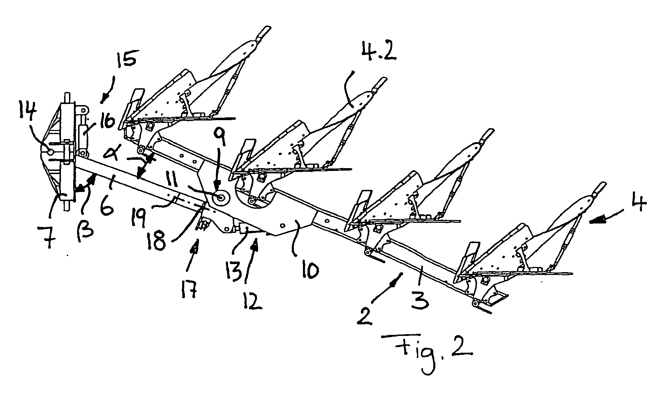

Mit seinem vorderen Ende ist der Anlenkträger an dem Anbaubock 7 gelagert, und zwar schwenkbar um eine vertikale Zugpunktachse 14 (vgl. Figur 2). Der Anlenkträger 6 kann im Pflugbetrieb freigängig um die genannte Zugpunktachse 14 schwenken, so dass er sich entsprechend dem eingestellten Winkel α selbsttätig seinen Nachlauf einstellt, d.h. der Winkel β zwischen dem Anlenkträger 6 und dem Anbaubock 7 ergibt sich von selbst durch die Freigängigkeit der Schwenkachse 14.

Der Anlenkträger 6 ist als Zug- und Tragelement ausgebildet, d.h. über den Anlenkträger 6 kann der Pflug vom Boden ausgehoben werden. Die Lagerungen des Pflugrahmens 2 an dem Anlenkträger 6 sowie des Anlenkträgers 6 am Anbaubock 7 übertragen vertikale Kräfte sowie Momente senkrecht zu den Schwenkachsen 9 bzw. 14.

Um im ausgehobenen Zustand ein ungewolltes Hin- und Herschwenken des Pfluges zu verhindern, ist der Zugpunktachse 14 eine Winkeleinstellvorrichtung 15 in Form eines hydraulischen Krafthebers 16 zugeordnet, der einerseits am Anbaubock 7 und andererseits an dem Anlenkträger 6 angreift. Durch den Kraftheber 16 kann der Anlenkträger 6 für die ausgehobene Pflugstellung in eine gewünschte Winkelstellung bezüglich der Schwenkachse 14 gebracht werden und sodann festgestellt werden. Hierzu kann der Hydraulikheber 16 hydraulisch verriegelt werden. Um im Pflugbetrieb die Freigängigkeit des Anienkträgers 6 zu gewährleisten, ist dem Kraftheber 16 eine Steuereinrichtung zugeordnet, die den Kraftheber 16 in Schwimmstellung schalten kann, wenn der Pflug arbeitet.

Zum Wenden des Pfluges ist eine Dreh- bzw. Wendevorrichtung 17 zwischen dem Anlenkträger 6 und dem Pflugrahmen 2 vorgesehen. Genauer gesagt umfasst der Anlenkträger 6 ein Drehgelenk 18 mit einer Schwenkachse koaxial zur Längsachse des Anlenkträgers 6, die zugleich die Dreh- bzw. Wendeachse des Pfluges bildet. Der pflugrahmenseitige Endabschnitt des Anlenkträgers 6 kann um die Wendeachse 19 gegenüber dem vorderen Abschnitt des Anlenkträgers 6 verdreht werden, so dass der Pflugrahmen mit den daran angeordneten Pflugscharreihen 4 und 5 gedreht wird. Die Wendevorrichtung 17 besitzt hierzu einen geeigneten Wendeantrieb 20, der in der gezeichneten Ausführungsform von einem hydraulischen Kraftheber gebildet wird, der an radialen Flanschabschnitten des Drehgelenks 18 angreift (vgl. Figur 1).

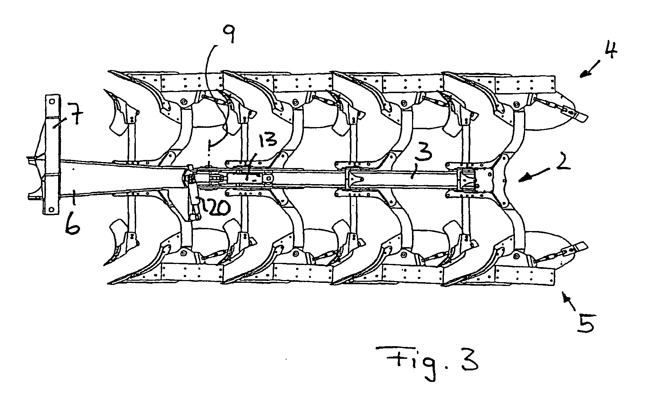

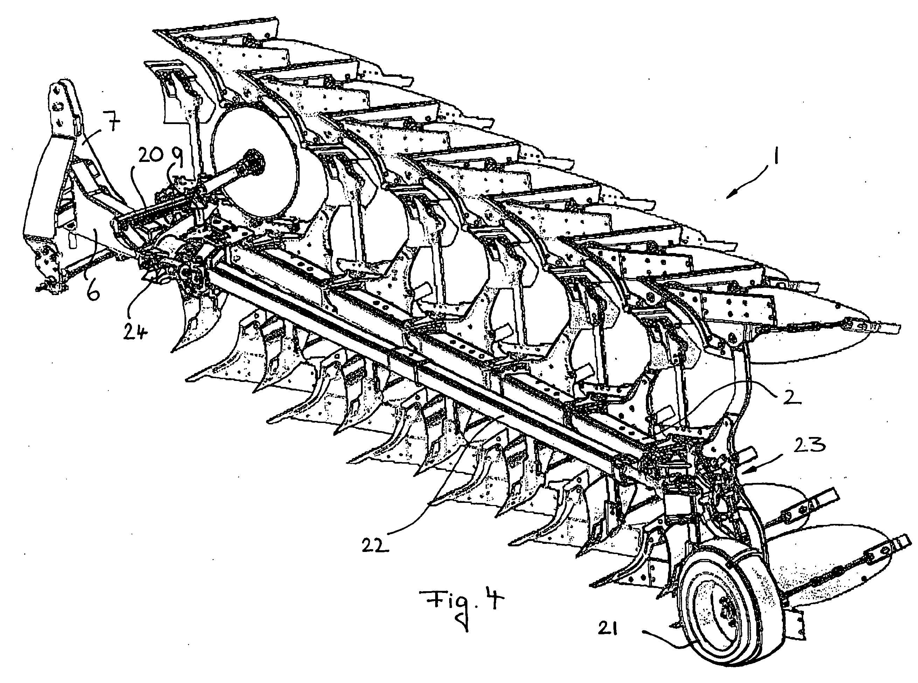

Die Figur 4 zeigt ein weiteres Ausführungsbeispiel eines erfindungsgemäßen Anbaudrehpfluges. Soweit der Pflug dieser Ausführung der Ausführung der Figuren 1 bis 3 ähnelt und einander entsprechende Bauteile aufweist, sind diese mit entsprechenden Bezugsziffern gekennzeichnet.

Der Anbaudrehpflug gemäß Figur 4 unterscheidet sich von der zuvor beschriebenen Ausführung zunächst dadurch, dass ein Stützrad 21 im Bereich des heckseitigen Endes des Pflugrahmens 2 mit diesem verbunden ist und den Pflugrahmen 2 am Boden abstützt. Das Stützrad 21 kann hierbei vorteilhafterweise als Nachlaufrad ausgebildet sein, das gegenüber dem Pflugrahmen 2 um eine aufrechte Nachlaufachse hin- und herschwenken kann, so dass sich der Pflug in der zuvor beschriebenen Weise selbst seine Spur suchen kann und ein Radieren des Stützrades vermieden ist.

Vorteilhafterweise kann der Pflugrahmen 2 mit demselben Stützrad 21 in beiden Wendestellungen abgestützt werden, so dass auf ein zusätzliches zweites Stützrad auf der gegenüberliegenden Seite des Pflugrahmens 2 verzichtet werden kann. Hierzu ist das Stützrad 21 gegenüber dem Pflugrahmen 2 um eine liegende, im wesentlichen in Längsrichtung des Pflugrahmens 2 weisende Schwenkachse gegenüber dem Pflugrahmen 2 verschwenkbar. Um ein Ausknicken in der jeweiligen Betriebsstellung zu verhindern, wird das Stützrad 21 durch einen Stabilisator 22 in der auf dem Boden aufstehenden Stellung gehalten. Wie Figur 4 zeigt, besteht der Stabilisator 22 im wesentlichen aus einem stangenförmigen Träger, der sich von dem Anlenkträger 6 zum Heck des Pflugrahmens 2 erstreckt und den Anlenkträger 6 sozusagen zum Heck hin verlängert. Der Stabilisator 22 bildet einen Hilfsrahmen zur Abstützung des Stützrades 21, das sowohl an dem genannten Stabilisator 22 als auch an dem Pflugrahmen 2 angelenkt ist. Wird der Pflugrahmen 2 mit den daran befestigten Pflugscharreihen 4 um die zur Längsachse des Anlenkträgers 6 parallele Schwenkachse mittels des Drehgelenks 18 gewendet, schwenkt der Pflugrahmen 2 über den Stabilisator hinweg auf dessen andere Seite, wobei das Stützrad 21 in seiner nach unten weisenden, auf dem Boden aufstehenden Stellung verbleibt.

Wie Figur 4 zeigt, kann das Stützrad 21 eine Höhenausgleichs- und/oder -einstellvorrichtung 23 ggf. mit einer Dämpfungs- und/oder Federeinrichtung aufweisen, die eine Höheneinstellung bzw. einen Höhenausgleich zwischen dem Stützrad 22 und dem Pflugrahmen 2 ermöglicht und in der gezeichneten Ausführung durch Teleskopzylinder und Schwenkhebel bzw. Schwinge verwirklicht ist.

Weiterhin besitzt die Ausführung des Pflugs nach Figur 4 eine weitere Schwenkachse für den Pflugrahmen 2. Letzterer kann gegenüber dem Anlenkträger 6 um eine liegende Querachse 24, die sich etwa im Bereich der Wendeachse 19 und/oder der Furchenbreiteneinstellachse 9 erstreckt, verschwenkt werden. Um die genannte Schwenkachse 24 kann der Pflugrahmen 2 insgesamt gegenüber dem Anlenkträger 6 auf- und niederwippen, um eine Bodenanpassung zu erreichen und beispielsweise dann, wenn das Stützrad 21 über eine Bodenwelle fährt, einen Ausgleich zwischen dem Pflugrahmen 2 und dem Anlenkträger 6 zu erlauben.

## Patentansprüche

1. Anbaudrehpflug mit einem Anbaubock (7), der mittels einer Mehrpunkt-, vorzugsweise Dreipunktanlenkung (8) an einem Schlepper anbaubar ist, einem Pflugrahmen (2), der zwei Pflugscharreihen (4, 5) trägt und um eine liegende Wendeachse (19) drehbar ist, sowie einem Anlenkträger (6), der den Pflugrahmen (2) trägt und am Anbaubock (7) um eine aufrechte Zugpunktachse (14) schwenkbar gelagert ist, wobei der Zugpunktachse (14) eine Winkeleinstellvorrichtung (15) zur Einstellung der Winkelstellung des Anlenkträgers (6) zugeordnet ist, und wobei zur Einstellung der Vorfurchenbreite der Pflugrahmen (2) an dem Anlenkträger (6) um eine aufrechte Furchenbreite-Einstellachse (9) schwenkbar und in verschiedenen Winkelstellungen verriegelbar ist, **dadurch gekennzeichnet, dass** der Winkeleinstellvorrichtung (15) eine Steuereinrichtung zugeordnet ist, die die Winkeleinstellvorrichtung (15) in eine freigängige Stellung schaltet, wenn der Pflug arbeitet, so dass der Anlenkträger (6) gegenüber dem Anbaubock (7) um die genannte aufrechte Zugpunktachse (14) freigängig schwenkbar ist.

2. Anbaudrehpflug nach dem vorhergehenden Anspruch, wobei der Anlenkträger (6) ein Drehgelenk (18) mit einer Drehachse (19) parallel zur Längsachse des Anlenkträgers (6) sowie einen Wendeantrieb (20), insbesondere einen hydraulischen Kraftheber, zur Verdrehung des pflugrahmenseitigen Endes des Anlenkträgers (6) aufweist.

3. Anbaudrehpflug nach dem vorhergehenden Anspruch, wobei das Drehgelenk (18) am pflugrahmenseitigen Ende des Anbauträgers (6) vorgesehen ist.

4. Anbaudrehpflug nach einem der vorhergehenden Ansprüche, wobei der Anlenkpunkt des Anlenkträgers (6) am Pflugrahmen (2) von beiden Enden des Pflugrahmens (2) beabstandet ist und hinter einer in Fahrrichtung ersten Pflugschar angeordnet ist.

5. Anbaudrehpflug nach dem vorhergehenden Anspruch, wobei der Anlenkpunkt in einer vorderen Hälfte des Pflugrahmens angeordnet ist.

6. Anbaudrehpflug nach einem der vorhergehenden Ansprüche, wobei der Anlenkträger (6) eine Länge besitzt, die größer als der Abstand zweier hintereinander angeordneter Pflugscharen ist.

7. Anbaudrehpflug nach einem der vorhergehenden Ansprüche, wobei der im Betrieb freigängigen Zugpunktachse (14) eine Schwenkverriegelungsvorrichtung (16) zur Verriegelung der Freigängigkeit in der ausgehobenen Transport- bzw. Wendestellung des Pflugs zugeordnet ist.

8. Anbaudrehpflug nach einem der vorhergehenden Ansprüche, wobei der Pflugrahmen (2) mit den daran vorgesehenen Pflugscharreihen (4, 5) über die Mehrpunktanlenkung des Anbaubocks (7) und/oder den Anlenkträger (6) aushebbar ist.

9. Anbaudrehpflug nach einem der vorhergehenden Ansprüche, wobei zumindest ein Stützrad (21) zur Bodenabstützung des Pflugs vorgesehen, insbesondere am Heck des Pflugrahmens (2) angeordnet ist.

10. Anbaudrehpflug nach dem vorhergehenden Anspruch, wobei der Pflugrahmen (2) in beiden Wendestellungen von demselben Stützrad (21) abstützbar ist und/oder das Stützrad (21) um eine liegende, sich etwa parallel zur Längsachse des Pflugrahmens (2) erstreckende Schwenkachse relativ zu dem Pflugrahmen (2) schwenkbar gelagert ist.

11. Anbaudrehpflug nach einem der beiden vorhergehenden Ansprüche, wobei das Stützrad (21) durch einen Stabilisator (22) insbesondere gegen Ausknicken gegenüber dem Pflugrahmen (2) geführt ist.

12. Anbaudrehpflug nach dem vorhergehenden Anspruch, wobei als Stabilisator ein vorzugsweise etwa stangenförmig ausgebildeter Hilfsrahmen vorgesehen ist, der sich von dem Anlenkträger (6) zur der Stützradanlenkstelle erstreckt, und der Pflugrahmen (2) zum Wenden des Pflugs um den Stabilisator (22) herum schwenkbar ist.

13. Anbaudrehpflug nach einem der vorhergehenden Ansprüche, wobei der Pflugrahmen (2) gegenüber dem Anlenkträger (6) um eine liegende Querachse (24) wippbar ist.

14. Anbaudrehpflug nach einem der vorhergehenden Ansprüche, wobei der Pflug als Onland-Pflug betreibbar ist.

## Claims

1. Mounted reversible plough including a mounting bracket (7) adapted to be attached to a tractor by means of a multi-point hitch, preferably a three-point hitch (8), a plough frame (2) carrying two sets of plough shares (4, 5) and being rotatable about a horizontal reversing axis (19), and a hitch beam (6) carrying the plough frame (2) and being articulated to the mounting bracket (7) such that it is pivotable about a vertical axis passing through the point of pull (14), wherein the vertical axis passing through the point of pull (14) is assigned an angle adjusting device (15) for adjusting the angular position of the hitch beam (6) and wherein, for adjusting the front furrow width, the plough frame (2) on the mounting beam (6) is pivotable about a vertical furrow width adjusting axis (9) and lockable in different angular positions
**characterised in that**
the angle adjusting device (15) is assigned a control equipment which sets the angle adjusting device (15) to a freely movable position when the plough is working, so that the hitch beam (6), with respect to the mounting bracket (7), is freely pivotable about said vertical axis passing through the point of pull (14).

2. Mounted reversible plough according to the preceding claim, wherein the hitch beam (6) includes a swivel joint (18) whose axis of rotation (19) is parallel to the longitudinal axis of the hitch beam (6) and a reversing drive (20), in particular a hydraulic power lift, for turning the plough frame-side end of the hitch beam (6) over.

3. Mounted reversible plough according to the preceding claim, wherein the swivel joint (18) is provided on the plough frame-side end of the hitch beam (6).

4. Mounted reversible plough according to any one of the preceding claims, wherein the hitch point of the hitch beam (6) on the plough frame (2) is spaced apart from both ends of the plough frame (2) and is disposed, with respect to the direction of movement, behind a first plough share.

5. Mounted reversible plough according to the preceding claim, wherein the hitch point is disposed in a front half part of the plough frame.

6. Mounted reversible plough according to any one of the preceding claims, wherein the hitch beam (6) has a length which is greater than the distance between two successive plough shares.

7. Mounted reversible plough according to any one of the preceding claims, wherein the axis passing through the point of pull (14) which is freely movable in operation is assigned a pivot locking device (16) for inhibiting the free movement when the plough is in its raised transport or turnover position.

8. Mounted reversible plough according to any one of the preceding claims, wherein the plough frame (2) with the sets of plough shares (4, 5) provided thereon can be raised above the multi-point hitch of the mounting bracket (7) and/or above the hitch beam (6).

9. Mounted reversible plough according to any one of the preceding claims, wherein at least one support wheel (21) for ground support of the plough is provided, in particular at the rear of the plough frame (2).

10. Mounted reversible plough according to the preceding claim, wherein the plough frame (2) can be supported in both turnover positions by the same support wheel (21) and/or the support wheel (21) is articulated, relative to the plough frame (2), such that it is pivotable about a horizontal pivot axis extending substantially in parallel to the longitudinal axis of the plough frame (2).

11. Mounted reversible plough according to one of the two preceding claims, wherein the support wheel (21) is guided by a stabiliser (22), in particular to prevent it from kinking with respect to the plough frame (2).

12. Mounted reversible plough according to the preceding claim, wherein the stabiliser is provided as a subframe preferably formed in a rod-type fashion which extends from the hitch beam (6) to the support wheel linkage point, and the plough frame (2) is pivotable about the stabiliser (22) for turning the plough over.

13. Mounted reversible plough according to any one of the preceding claims, wherein the plough frame (2) is able to seesaw, with respect to the hitch beam (6), about a horizontal transversal axis (24).

14. Mounted reversible plough according to any one of the preceding claims, wherein the plough can be operated as an onland plough.

## Revendications

1. Charrue portée réversible comprenant un support rapporté (7), qui peut être rapporté sur un tracteur au moyen d'une articulation à plusieurs points, de préférence à trois points (8), un cadre de charrue (2), qui porte deux rangées de socs de charrue (4, 5) et peut tourner autour d'un axe de retournement (19), ainsi qu'un support d'articulation (6), qui porte le cadre de charrue (2) et est fixé sur le support rapporté (7) de façon à pouvoir basculer autour d'un axe vertical de point de traction (14), un dispositif de réglage d'angle (15) destiné au réglage de la position d'angle du support d'articulation (6) étant attribué à l'axe du point de traction (14), et le cadre de charrue (2) pouvant être basculé sur le support d'articulation (6) autour d'un axe de réglage de largeur de sillon (9) vertical pour le réglage de la largeur du sillon avant des cadres de charrue (2) et pouvant être verrouillé dans différentes positions d'angle, **caractérisée en ce qu'**au dispositif de réglage d'angle (15) est attribué un dispositif de commande qui commute le dispositif de réglage d'angle (15) dans une position libre lorsque la charrue travaille, de sorte que le support d'articulation (6) peut basculer librement par rapport au support rapporté (7) autour dudit axe de point de traction (14) vertical.

2. Charrue portée réversible selon la revendication précédente, le support d'articulation (6) présentant une articulation rotative (18) avec un axe de rotation (19) parallèlement à l'axe longitudinal du support d'articulation (6) et un entraînement de retournement (20), en particulier un vérin hydraulique, pour la rotation de l'extrémité côté cadre de charrue du support d'articulation (6).

3. Charrue portée réversible selon la revendication précédente, l'articulation rotative (18) étant prévue sur l'extrémité côté cadre de charrue du support d'articulation (6) .

4. Charrue portée réversible selon l'une quelconque des revendications précédentes, le point d'articulation du support d'articulation (6) sur le cadre de charrue (2) étant espacé des deux extrémités du cadre de charrue (2) et étant disposé derrière un premier, dans le sens de marche, soc de charrue.

5. Charrue portée réversible selon l'une quelconque des revendications précédentes, le point d'articulation étant disposé dans une moitié avant du cadre de charrue.

6. Charrue, portée réversible selon l'une quelconque des revendications précédentes, le support d'articulation (6) présentant une longueur qui est supérieure à l'espacement de deux socs de charrue disposés l'une derrière l'autre.

7. Charrue portée réversible selon l'une quelconque des revendications précédentes, un dispositif de verrouillage de pivotement (16) pour le verrouillage de la course libre dans la position de transport ou de retournement soulevée de la charrue étant attribué à l'axe du point de traction (14) libre en service.

8. Charrue portée réversible selon l'une quelconque des revendications précédentes, le cadre de charrue (2) pouvant être soulevé avec les rangées de socs de charrue (4, 5) prévues dessus au moyen de l'articulation à plusieurs points du support rapporté (7) et/ou du support d'articulation (6).

9. Charrue portée réversible selon l'une quelconque des revendications précédentes, au moins une roue de support (21) étant prévue pour l'appui au sol de la charrue, en particulier étant disposée à l'arrière du cadre de charrue (2) .

10. Charrue portée réversible selon la revendication précédente, le cadre de charrue (2) pouvant être soutenu dans les deux positions de retournement par la même roue de support (21) et/ou la roue de support (21) étant logée de façon à pouvoir basculer par rapport au cadre de charrue (2) autour d'un axe de pivotement horizontal, s'étendant à peu près parallèlement à l'axe longitudinal du cadre de charrue (2).

11. Charrue portée réversible selon l'une quelconque des revendications précédentes, la roue de support (21) étant guidée par un stabilisateur (22) en particulier contre un pliage par rapport au cadre de charrue (2).

12. Charrue portée réversible selon la revendication précédente, un cadre auxiliaire conçu de préférence par exemple en forme de barre étant prévu comme stabilisateur, lequel cadre s'étend depuis le support d'articulation (6) vers le point d'articulation de roue de support, et le cadre de charrue (2) pouvant pivoter pour le retournement de la charrue autour du stabilisateur (22).

13. Charrue portée réversible selon l'une quelconque des revendications précédentes, le cadre de charrue (2) pouvant basculer par rapport au support d'articulation (6) autour d'un axe transversal (24) horizontal.

14. Charrue portée réversible selon l'une quelconque des revendications précédentes, la charrue pouvant être exploitée comme charrue Onland.
